# EUROPEAN PATENT APPLICATION

(11) **EP 4 718 293 A1**
(43) Date of publication of application: **01.04.2026**
(21) Application number: 25204675.0
(22) Date of filing: 25.09.2025
(51) Int. Cl.: G06F 21/35, G06F 3/12, G06F 21/60, H04L 9/40, H04W 12/06, H04W 12/50, H04W 12/63

(54) **SYSTEM AND METHOD FOR FACILITATING SECURE PROXIMITY BOUND OPERATIONS**

(30) Priority: 27.09.2024 IN 202441073087
(71) Applicant: NXP B.V., 5656 AG Eindhoven (NL)
(72) Inventor: Jogi, Sunil Dilipkumar, 5656AG Eindhoven (NL); Parthasarathi, Srivathsa Masthi, 5656AG Eindhoven (NL); de Perthuis, Hugues Jean Marie, 5656AG Eindhoven (NL); Swaminathan, Sundaresan, 5656AG Eindhoven (NL)
(74) Representative: Krott, Michel

(57) **Abstract**

Process handler for executing secure operations is disclosed. A token is provided to a user device by a process initiator based on an input received from a user of the user device. The token and user data associated with the input are further received by the process handler from the process initiator and stored by the process handler. When the user device is in proximity of the process handler, the process handler establishes a secure ultrawideband ranging session with the user device and further receives the token from the user device. A match between the received token from the user device and the stored token in the process handler is identified. The process handler validates the user device based on the match. Based on the validation of the user device, the process handler executes the secure operation on the user data.

## Description

### FIELD OF USE

**The** present disclosure relates generally to wireless communications and, more particularly, to a system and method for facilitating secure proximity bound operations.

### BACKGROUND

To print data, a user typically selects a print command on an electronic device. Based on the print command, the electronic device transmits the data to be printed to a printing system by way of a wired connection or wirelessly. When the user arrives at a location of the printing system, the user either enters login details into the printing system or taps a card that stores an identifier of the user such as a name of the user, at the printing system, for identification of the user. The printing system prints the data (e.g., execute a printing operation) upon successfully identifying the user. Such operations are however, susceptible to network attacks that result in loss of the data during transmission. In addition, it is inconvenient for the user to remember the login details or carry the card each time to the location of the printing device.

### BRIEF DESCRIPTION OF DRAWINGS

The following detailed description of the embodiments of the present disclosure will be better understood when read in conjunction with the appended drawings. The present disclosure is illustrated by way of example, and not limited by the accompanying figures, in which like references indicate similar elements.
FIG. 1 illustrates a schematic diagram of a system environment in accordance with an embodiment of the present disclosure;
FIGS. 2A-2C represent a process flow diagram that illustrates operations executed by a process initiator, a user device, and a process handler of the system environment of FIG. 1 in accordance with an embodiment of the present disclosure; and
FIGS. 3A-3B, collectively represent a flowchart that illustrates a secure method executed by the process handler of the system environment of FIG. 1 in accordance with an embodiment of the present disclosure.

### Overview:

In conventional printing systems, a user provides a print command associated with user data on an electronic device and the user data is transmitted to a printing system by the electronic device by way of a wired connection or wirelessly. When the user arrives at a location of the printing system, the user may either enter login details such as username and password into the printing system or tap a near field communication (NFC) card that stores an identifier of the user such as a name of the user, at the printing system. The printing system may authenticate the user based on at least one of the login details and the identifier. Upon successfully authenticating the user, the printing system may print the user data (e.g., execute a printing operation) associated with the user. Such operations are, however, susceptible to network attacks that may result in loss of the user data during transmission. In addition, it is inconvenient for the user to remember and input the login details for printing the data or carry the NFC card each time to the location of the printing device.

In one or more embodiments, systems, methods, and devices are described herein that enable secure printing using ultrawideband ranging-based proximity (e.g., handsfree printing). In one or more embodiments, a computing device (such as a laptop computer) may establish a secure channel with a printer, such as a standalone printer, a network printer, or a shared drive that can be accessed for printing. A user may interact with the computing device to initiate a printing operation to print a selected file. The computing device may be understood to be a process initiator.

In one or more embodiments, in response to initiating the printing operation, the computing device may generate a token for validation with a remote printer (process handler) and sends the token to the user's communication device (user device), such as a smartphone. The computing device (process initiator) may rename the selected file with the token and upload the renamed file to the secure channel for printing. When the user approaches a selected printer (process handler) with his or her smartphone (user device), the printer (process handler) may perform UWB secure ranging to authenticate the smartphone (user device). Once the smartphone is authenticated, the smartphone may transfer the token to the printer (process handler). The printer may compare the token received from the smartphone to one or more file names of files to be printed and, when a match is found, the printer may print the file having a name that matches the token. This process ensures that the printer prints the correct file and security is enhanced because the printer only prints the selected file when the user with the correct token is proximate to the printer.

In one or more embodiments, the token may be a 16-byte (128-bit) token including random data. In one or more embodiments, the token may have an associated time-to-live (TTL) value or expiration such that the token will only work for a limited time.

Various embodiments of the present disclosure disclose a system environment that may include a process handler. The process handler may establish a secure ranging session with a user device based on the user device being within a detection range (e.g., a proximity) of the process handler. The process handler may receive, based on the established secure ranging session, a first token from the user device that may expire after a validity period. The established secure ranging session may be a ultrawideband (UWB) ranging session. The first token may be generated by a process initiator to facilitate a secure operation on secure data associated with a user of the user device based on an input received from the user. Further, the first token may be provided to the user device by the process initiator. Prior to receiving the first token from the user device, the process handler may receive the secure data and a set of instructions corresponding to the secure operation from the process initiator. The process handler may further store the secure data and the set of instructions, which may include a second token that may be an identifier of the secure data. Further, the second token may be identical to the first token. Upon receiving the first token from the user device, the process handler may identify a match between the first token and the second token and validate the user device based on the identified match. Upon validating the user device within the validity period, the process handler may execute the secure operation on the secure data based on the set of instructions.

The system environment of the present disclosure may provide a robust, secure solution to print the secure data based on a match between the first token and the second token. Further, the secure operation may be accurately executed on the secure data by way of the second token, thereby avoiding printing of any erroneous data. The effects of network attacks, such as man-in-the-middle or relay attacks, that may occur during the transmission of the first token and the second token may be significantly reduced due to transmission of the secure data with the second token in the secure ranging session. Further, the system environment may provide enhanced security as the execution of the secure operation may have to be within the validity period. In addition, a need for the user to remember or maintain unique identifiers associated with the user (e.g., username and password, cards) for the execution of the secure operation may be eliminated thereby providing a seamless, hands-free operation to the user. The execution of the secure operation may be based on the user device being within the detection range of the process handler. Thus, the need to generate prompts by the process handler to confirm an intent of the user to execute the secure operation may be eliminated. An experience of the user may be thus improved over conventional printing mechanisms.

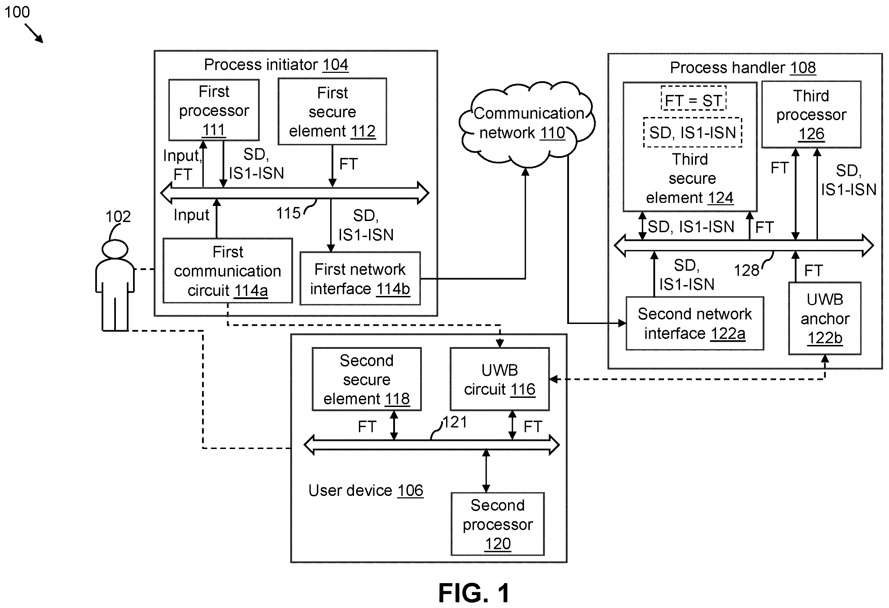

FIG. 1 illustrates a schematic diagram of a system environment 100, in accordance with an embodiment of the present disclosure. The system environment 100 may include a user 102, a process initiator 104, a user device 106, and a process handler 108. The user 102 may own the user device 106. The user device 106 may be an ultrawideband (UWB) communication device. In one or more embodiments, the user device 106 may be a smartphone, a tablet computer, a laptop computer, or other portable communications device capable of short-range wireless communications (e.g., Bluetooth, etc.) or ultrawideband communications. UWB communication may be a type of wireless communication that involves the transmission of data between devices using a wide frequency range, generally reaching several gigahertz (GHz). An example of the wide frequency range may be 3.1 GHz to 10.6 GHz. The user device 106 may communicate with the process initiator 104 and the process handler 108 by way of UWB communication. Further, the process handler 108 may be remotely located from the process initiator 104.

The system environment 100 may further include a communication network 110. The process initiator 104 may communicate with the process handler 108 by way of the communication network 110. The communication network 110 may be Internet that may follow a hypertext transfer protocol secure (HTTPS). HTTPS is an extension of HTTP (Hypertext Transfer Protocol) and may be utilized for secure communication over a computer network, primarily the Internet. Further examples of the communication network 110 may include a local area network (LAN), a wide area network (WAN), a cloud network, or the like.

The system environment 100 may further include one or more service providers. A service provider may be a company, an organization, an establishment, or the like, that may offer one or more services to the user 102. An example of service providers may be offices. Examples of the services offered by the service providers may include offices offering printing services or the like. The service provider may establish infrastructure to facilitate the provision of the one or more services to the user 102.

### Process initiator 104:

The process initiator 104 may include suitable circuitry that may be configured to perform one or more operations. For example, the process initiator 104 may configured to communicate with the process handler 108 to facilitate the execution of a secure operation. The circuitry of the process initiator 104 may include a first processor 111, a first secure element 112, a first communication circuit 114a, a first network interface 114b, and a first communication channel 115. The first processor 111, the first secure element 112, the first communication circuit 114a, and the first network interface 114b may communicate with each other by way of the first communication channel 115. Examples of the first communication channel 115 may include a serial peripheral interface (SPI), an inter-integrated channel (I2C), or the like. Examples of the process initiator 104 may include a laptop computer, a desktop computer, a network of computers, a tablet computer, or the like.

### First processor 111:

The first processor 111 may include suitable circuitry that may be configured to perform one or more operations. For example, the first processor 111 may be configured to control printing operations. The first processor 111 may be further configured to receive an input from the user 102 by way of the first communication circuit 114a, that may be indicative of executing a printing operation on user data. In other words, the input may indicate execution of a secure operation on secure data SD as explained in the ongoing description. The input may include a print command. In an example, the user may select the print command on the user data by way of a user interface rendered by the process initiator 104. The user data may be a document or a file that may be uploaded or stored on the process initiator 104, by the user 102. The user data may have a file identifier (ID) (e.g., a file name) to identify the user data. The user data may be stored in a memory associated with the process initiator 104.

The first processor 111 may be further configured to generate a set of instructions IS1-ISN upon receiving the user data. For example, the set of instructions IS1-ISN may include a first instruction IS1 and a second instruction IS2. The first instruction IS1 may be indicative of a print format to print the user data, and the second instruction IS2 may be indicative of print settings such as a paper size, an orientation of the paper, a resolution of the paper, and a color setting to print the user data. Examples of the print format may include postscript and printer command language (PCL).

The first processor 111 may be further configured to generate a first request based on the input and provide the first request to the first secure element 112 by way of the first communication channel 115. The first request may indicate the first secure element 112 to generate a first token FT having a validity period (e.g. a time-to-live value). The first token FT may be a string of random alphanumeric characters (e.g., random data) having a token length (e.g., a frame length) of at least 16 bytes or 128 bits. The first token FT may be set to expire after the validity period. In an example, the first processor 111 may determine the validity period based on a location of the process handler 108 and a time to execute the printing operation. The first processor 111 may provide the determined validity period to the first secure element 112 by way of the first request such that the first secure element 112 may generate the first token FT with the determined validity period. In further embodiments, the validity period may be randomly determined by one of the first processor 111 and the first secure element 112.

The first processor 111 may be further configured to receive the first token FT from the first secure element 112 based on the first request. The first processor 111 may be further configured to transmit the first token FT to the user device 106 by way of the first communication circuit 114a. In an embodiment, the first token FT may be transmitted to the user device 106 by way of a secure data session established between the process initiator 104 and the user device 106.

The first processor 111 may be further configured to rename the file ID of the user data with a second token (shown in the process handler 108). The first token FT and the second token are identical. Thus, the second token may include the random data and have the token length of at least 16 bytes. Upon renaming the file ID of the user data with the second token, the user data is converted to the secure data SD. In other words, the user data may be encoded with the second token such that the second token may be the identifier of the secure data SD. The secure operation such as the printing operation may thus be executed on the secure data SD.

In one embodiment, the first processor 111 may be further configured to identify an available printer (e.g., the process handler 108) to execute the secure operation. In further embodiments, the first processor 111 may be further configured to receive a selection from the user 102 based on the input such that the selection indicates an identifier of the process handler 108 to execute the secure operation. The first processor 111 may thus be configured to identify the process handler 108 based on the selection. Upon identifying the process handler 108, the first processor 111 may be further configured to transmit the set of instructions IS1-ISN and the secure data SD to the process handler 108 by way of the first network interface 114b and the communication network 110. Examples of the first processor 111 may be a central processing unit (CPU), a graphics processing unit (GPU), a microcontroller, an application-specific integrated circuit (ASIC), or the like.

### First secure element 112:

The first secure element 112 may include suitable circuitry that may be configured to perform one or more operations. For example, the first secure element 112 may be configured to store first preconfigured credentials of the process initiator 104 and authenticate the process initiator 104 during a first mutual authentication between the process initiator 104 and the user device 106. The first mutual authentication may occur when the user device 106 may be detected to be within a first range of the process initiator 104. The first range may be a predetermined area of the process initiator 104 such that the process initiator 104 may detect the presence of any device (e.g., the user device 106) within the first range. The first mutual authentication may further occur based on first preconfigured credentials (e.g., an identifier of the process initiator 104) and second preconfigured credentials (e.g., an identifier of the user device 106) and will be understood by a person skilled in the art. In addition, the first mutual authentication may include transmission and reception of requests and responses associated with the first and second preconfigured credentials, between the process initiator 104 and the user device 106 to verify the identity of each of the process initiator 104 and the user device 106. In an embodiment, the first range may be 10 square centimeters (cm²) when the first secure element 112 receives the requests and the responses from a first Bluetooth communication circuit of the first communication circuit 114a. In further embodiments, the first range may be 5 square meters (m²) when the first secure element 112 receives the requests and the responses from a UWB communication circuit of the first communication circuit 114a. The first secure element 112 may be further configured to generate the first token FT upon receiving the first request from the first processor 111. The first secure element 112 may be further configured to provide the first token FT to the first processor 111 upon generating the first token FT. In one or more embodiments, the first secure element 122 may be implemented as an embedded microchip with predetermined applications, a secure digital card such as a flash memory card, or the like.

### First communication circuit 114a:

The first communication circuit 114a may include suitable circuitry that may be configured to perform one or more operations. The circuitry of the first communication circuit 114a may include at least one of a transceiver circuit, the first Bluetooth communication circuit, and the UWB communication circuit. For example, the transceiver circuit of the first communication circuit 114a may be configured to receive the input, from the user device 106. The transceiver circuit may be further configured to provide the input to the first processor 111. The first processor 111 may thus be triggered to generate the first request based on the received input from the transceiver circuit.

The first communication circuit 114a may be further configured to detect the user device 106 being within the first range of the process initiator 104 by way of one of the first Bluetooth communication circuit and the UWB communication circuit. Upon detecting the user device 106, the first mutual authentication may occur. When the first mutual authentication is successful, the first communication circuit 114a may be further configured to establish the secure data session between the process initiator 104 and the user device 106 by way of one of the first Bluetooth communication circuit and the UWB communication circuit. The secure data session between the process initiator 104 and the user device 106 may be one of a group consisting of a UWB secure data session and a Bluetooth low energy secure data session.

The first communication circuit 114a may be further configured to receive the first token FT from the first processor 111 by way of one of the first Bluetooth communication circuit and the UWB communication circuit. The first communication circuit 114a may be further configured to transmit the first token FT to the user device 106 based on the established secure data session. In further embodiments, the first communication circuit 114a may receive the first token FT from the first secure element 112.

In further embodiments, the first Bluetooth communication circuit of the first communication circuit 114a may transmit the first token FT to a second Bluetooth communication circuit of the user device 106. In further embodiments, the UWB communication circuit of the first communication circuit 114a may transmit the first token FT to the UWB circuit 116 of the user device 106.

### First network interface 114b:

The first network interface 114b may further be configured to receive the set of instructions IS1-ISN and the secure data SD corresponding to the secure operation from the first processor 111 and transmit the set of instructions IS1-ISN and the secure data SD to the process handler 108 by way of the communication network 110. The first network interface 114b may include a multi-protocol communication chip that may enable the process initiator 104 to communicate with the process handler 108. Examples of the first network interface 114b may include a wireless fidelity (Wi-Fi) Chips, an ethernet controller, a network interface card, or any combination thereof.

### User device 106:

The user device 106 may include suitable circuitry that may be configured to perform one or more operations. For example, the user device 106 may be configured to receive the first token FT from the process initiator 104 during the secure data session established between the process initiator 104 and the user device 106. The circuitry of the user device 106 may include a second secure element 118, a second processor 120, a UWB circuit 116, and a second communication channel 121. The second secure element 118, the second processor 120, and the UWB circuit 116 may communicate with each other by way of the second communication channel 121. Examples of the second communication channel 121 may include a serial peripheral interface (SPI), an inter-integrated channel (I2C), or the like.

### UWB circuit 116:

The UWB circuit 116 may include suitable circuitry that may be configured to perform one or more operations. For example, the UWB circuit 116 may be configured to receive the requests and responses from the process initiator 104 during the first mutual authentication and provide the received requests and responses to the second secure element 118. Based on the established secure data session between the user device 106 and the process initiator 104, the UWB circuit 116 may be further configured to receive the first token FT from the process initiator 104. The UWB circuit 116 may be further configured to provide the first token FT to the second secure element 118.

The UWB circuit 116 may be configured to receive requests and responses from the process handler 108 during a second mutual authentication. The second mutual authentication may occur when the user device 106 may be detected to be within a detection range (e.g. proximity) of the process handler 108. Thus, the user device 106 may be detected prior to establishing a secure ranging session between the user device 106 and the process handler 108. The detection range may be a predetermined area proximate to the process handler 108 such that the process handler 108 may detect the presence of any device (e.g., the user device 106) within the detection range. The second mutual authentication may further occur based on the second preconfigured credentials stored in the second secure element 118 of the user device 106 and third preconfigured credentials (e.g. an identifier of the process handler 108) and will be understood by a person skilled in the art. In an exemplary embodiment, the detection range may be 5 square meters (m²). When the second mutual authentication may be successful (e.g., the identities of both the user device 106 and the process handler 108 may be verified), the secure ranging session may be established between the user device 106 and the process handler 108. The secure ranging session may be a UWB ranging session. The UWB circuit 116 may be further configured to receive the first token FT from the second secure element 118 based on the successful second mutual authentication. The UWB circuit 116 may be further configured to transmit the first token FT to the process handler 108 in the secure ranging session.

Though it is mentioned that the UWB circuit 116 may receive the first token FT from the process initiator 104, in various embodiments, the second Bluetooth communication circuit of the user device 106 may receive the requests and responses from the process initiator 104 during the first mutual authentication. The second Bluetooth communication circuit of the user device 106 may further receive the first token FT from the process initiator 104 and provide the first token FT to the second secure element 118.

### Second secure element 118:

The second secure element 118 may include suitable circuitry that may be configured to perform one or more operations. For example, the second secure element 118 may be configured to store the second preconfigured credentials and authenticate the process initiator 104 during the first mutual authentication between the process initiator 104 and the user device 106 based on the first and second preconfigured credentials. Based on the first mutual authentication being successful, the second secure element 118 may be further configured to receive the first token FT from the process initiator 104 (e.g., the first secure element 112 and the first communication circuit 114a) by way of the UWB circuit 116. The second secure element 118 may be further configured to store the first token FT based on the reception.

The second secure element 118 may be further configured to authenticate the process handler 108 during the second mutual authentication between the process handler 108 and the user device 106 based on the second preconfigured credentials, and the third preconfigured credentials associated with the process handler 108. The second mutual authentication may include transmission and reception of requests and responses associated with the second preconfigured credentials and the third preconfigured credentials between the user device 106 and the process handler 108 and will be understood by a person skilled in the art. The secure ranging session may be established between the user device 106 and the process handler 108 based on the second mutual authentication being successful. The second secure element 118 may be further configured to transmit the first token FT in the secure ranging session to the process handler 108 by way of the UWB circuit 116. In one or more embodiments, the second secure element 118 may be implemented as an embedded microchip with predetermined applications, a secure digital card such as a flash memory card, or the like.

### Second processor 120:

The second processor 120 may include suitable circuitry that may be configured to perform one or more operations. For example, the second processor 120 may be configured to generate a second request and provide the second request to the second secure element 118 by way of the second communication channel 121. The second processor 120 may provide the second request based on the second mutual authentication being successful. In an example, the second processor 120 may be configured to receive a trigger signal indicating the generation of a second request from the UWB circuit 116 based on the successful second mutual authentication. The second request may indicate the second secure element 118 to provide the first token FT to the UWB circuit 116. The UWB circuit 116 may further provide the first token FT to the process handler 108. Examples of the second processor 120 may be a central processing unit (CPU), a graphics processing unit (GPU), a microcontroller, an application-specific integrated circuit (ASIC), or the like.

In further embodiments, the UWB circuit 116 may generate the second request to receive the first token FT from the second secure element 118.

### Process handler 108:

The process handler 108 may be configured to communicate with the user device 106 to facilitate the execution of the secure operation. Although FIG. 1 illustrates that the system environment 100 includes one process handler (e.g., the process handler 108), the scope of the present disclosure is not limited to it. In further embodiments, the system environment 100 may include more than one process handler, without deviating from the scope of the present disclosure. The process handler 108 may correspond to one of a standalone printer, a network printer, or the like.

The process handler 108 may include suitable circuitry such as a third secure element 124, a second network interface 122a, a UWB anchor 122b, a third processor 126, and a third communication channel 128 that may be configured to perform one or more operations of the process handler 108. The third secure element 124, the second network interface 122a, the UWB anchor 122b, and the third processor 126 may communicate with each other by way of the third communication channel 128. The circuitry of the process handler 108 may be configured to establish the secure ranging session with the user device 106 based on the user device 106 being within the detection range associated with the circuitry of the process handler 108 and the second mutual authentication between the process handler 108 and the user device 106 being successful. The circuitry may be further configured to receive the first token FT from the user device 106 based on the established secure ranging session. The user device 106 may receive the first token FT from the process initiator 104 to facilitate execution of the secure operation.

In one embodiment, the circuitry of the process handler 108 may be further configured to receive the secure data SD (e.g., the user data encoded with the second token ST such that the second token ST may be the identifier of the secure data SD) and the set of instructions IS1-ISN from the process initiator 104 that may be associated with execution of the secure operation on the secure data SD. The circuitry of the process handler 108 may be further configured to determine the second token ST associated with the process initiator 104 upon receiving the first token FT from the user device 106. The circuitry may be further configured to validate the user device 106 (e.g., validate an identity of the user 102 and a location of the process handler 108) based on a match between the first token FT and the second token ST of the secure data SD. The circuitry of the process handler 108 may validate the user device 106 in the validity period. Further, upon validating the user device 106, the circuitry may be further configured to execute the secure operation based on the secure data SD and the set of instructions IS1-ISN. Examples of the third communication channel 128 may include a serial peripheral interface (SPI), an inter-integrated channel (I2C), or the like. The operations of the circuitry are explained in detail by means of the third secure element 124, the second network interface 122a, the UWB anchor 122b, and the third processor 126.

### Second network interface 122a:

The second network interface 122a may be configured to wirelessly receive the set of instructions IS1-ISN and the secure data SD corresponding to the secure operation from the process initiator 104 by way of the communication network 110. The second network interface 122a may include a multi-protocol communication chip that may enable the process handler 108 to communicate with the process initiator 104. Examples of the second network interface 122a may include a wireless fidelity (Wi-Fi) Chips, an ethernet controller, a network interface card, or any combination thereof.

### UWB anchor 122b:

The UWB anchor 122b may include suitable circuitry that may be configured to perform one or more operations. For example, the UWB anchor 122b may be configured to detect the user device 106 being within the detection range of the UWB anchor 122b (e.g., the process handler 108). The UWB anchor 122b may detect that the user device 106 is within the detection range based on one or more values received from the user device 106 (e.g., the UWB circuit 116) during one or more sessions established between the UWB circuit 116 and the UWB anchor 122b. Upon detecting the user device 106, the second mutual authentication may occur. During the second mutual authentication, the UWB anchor 122b may receive and transmit requests and responses associated with the second preconfigured credentials and the third preconfigured credentials. Upon successful second mutual authentication and based on the user device 106 being in the detection range, the UWB anchor 122b may be further configured to establish the secure ranging session between the process handler 108 and the user device 106. The UWB anchor 122b may be further configured to receive the first token FT from the user device 106 based on the established secure ranging session. The UWB anchor 122b may be further configured to provide the first token FT to the third processor 126 based on the reception. In further embodiments, the UWB anchor 122b may be further configured to provide the first token FT to the third secure element 124 as compared to the third processor 126.

### Third secure element 124:

The third secure element 124 may include suitable circuitry that may be configured to perform one or more operations. For example, the third secure element 124 may be configured to store the third preconfigured credentials. Based on the second preconfigured credentials and the third preconfigured credentials, the second mutual authentication may be successful. The third secure element 124 may further be configured to receive the secure data SD with the second token ST, and the set of instructions IS1-ISN to execute the secure data SD from the process initiator 104 by way of the first network interface 114b, the communication network 110, and the second network interface 122a. The set of instructions IS1-ISN may be received to execute the secure data SD. The third secure element 124 may receive the secure data SD and the set of instructions IS1-ISN by way of the second network interface 122a of the process handler 108. The third secure element 124 may be further configured to store the secure data SD (e.g., the user data and the second token ST) and the set of instructions IS1-ISN based on the reception.

The third secure element 124 may be further configured to authenticate the process handler 108 during the second mutual authentication. The third secure element 124 may be further configured to transmit and receive the requests and responses associated with the second preconfigured credentials and the third preconfigured credentials to authenticate the user device 106. Upon successful second mutual authentication, the third secure element 124 may be further configured to trigger the UWB anchor 122b to establish the secure ranging session.

The third secure element 124 may be further configured to receive the first token FT from the first processor 111 of the user device 106 based on the established secure ranging session. The third secure element 124 may receive the second token ST (e.g., the file ID) of the secure data SD associated with the secure operation from the process initiator 104 prior to receiving the first token FT from the user device 106. Upon receiving the first token FT, the third secure element 124 may be further configured to determine the second token ST associated with the process initiator 104, in the third secure element 124 to validate the user device 106. Upon determining the second token ST, the third secure element 124 may be further configured to compare the first token FT with any of the stored tokens (such as the second token ST) to further determine the match between the first token FT and the second token ST (FT=ST). Based on a successful match between the two tokens, the third secure element 124 may validate the user device 106.

Prior to validating the user device 106, the third secure element 124 may ensure that both the first token FT and the second token ST may be valid (i.e., not expired). As the first token FT and the second token ST may be set to expire after the validity period, the user 102 may have a limited time in which to carry the user device 106 into the proximity of the process handler 108 so that the process handler 108 can determine the match between the first token FT and the second token ST before the tokens expire. The third secure element 124 may be unable to match the first token FT and the second token ST after the validity period. The third secure element 124 may be further configured to provide the secure data SD and the set of instructions IS1-ISN upon validating the user device 106, to the third processor 126. The secure operation may be executed on the secure data SD based on the set of instructions IS1-ISN.

Though it is mentioned that the third secure element 124 may receive the first token FT from the third processor 126, in various embodiments, the third secure element 124 may receive the first token FT from the UWB anchor 122b.

### Third processor 126:

The third processor 126 may include suitable circuitry that may be configured to perform one or more operations. For example, the third processor 126 may be configured to facilitate the installation of various applications (such as a printing application). The third processor 126 may be further configured to receive the first token FT from the user device 106 by way of the UWB anchor 122b based on the secure ranging session established between the process handler 108 and the user device 106.

The third processor 126 may be further configured to provide the first token FT to the third secure element 124 to validate the user device 106. Upon successfully validating the user device 106, the third processor 126 may be further configured to receive the secure data SD and the set of instructions IS1-ISN from the third secure element 124. The third processor 126 may thus execute the secure operation on the secure data SD based on the set of instructions IS1-ISN. In a scenario, the third processor 126 may execute the printing operation (the secure operation) on the user data (e.g., the secure data SD) such that the user data may be printed. Examples of the third processor 126 may be a central processing unit (CPU), a graphics processing unit (GPU), a microcontroller, an application-specific integrated circuit (ASIC), or the like.

In further embodiments, the one or more operations performed by the third secure element 124 may be performed by the third processor 126. In an example, the third processor 126 may match the first token FT and the second token ST to validate the user device 106.

In further embodiments, the process initiator 104 may provide the secure data SD and the set of instructions IS1-ISN to a printing server that may be wirelessly coupled to a plurality of process handlers that may include the process handler 108. The process initiator 104 may provide the secure data SD and the set of instructions IS1-ISN to the printing server in scenarios where the process initiator 104 may be unable to identify a process handler for executing the secure operation. The process initiator 104 may thus provide the secure data SD and the set of instructions IS1-ISN based on a secure communication session established between the process initiator 104 and the printing server. When one of the plurality of process handlers (e.g., the process handler 108) may detect the user device 106 to be within the detection range, the process handler 108 may communicate the detection of the user device 106 to the printing server such that the printing server may provide the secure data SD and the set of instructions IS1-ISN to the process handler 108.

For the sake of simplicity of explaining the ongoing description, the examples provided with each of the requests, messages, data, signals, and responses generated by either of the process initiator 104, the user device 106, and the process handler 108 are associated with printing of data (e.g., the secure operation) in an office environment. However, the scope is not limited to it. In various other embodiments, the messages, requests, data, signals, and responses generated by either of the process initiator 104, the user device 106, and the process handler 108 may be indicative of other exemplary scenarios (such as retrieving a food order from a vending machine in a shopping mall based on the match between the first token FT and the second token ST) and will be understood by a person skilled in the art.

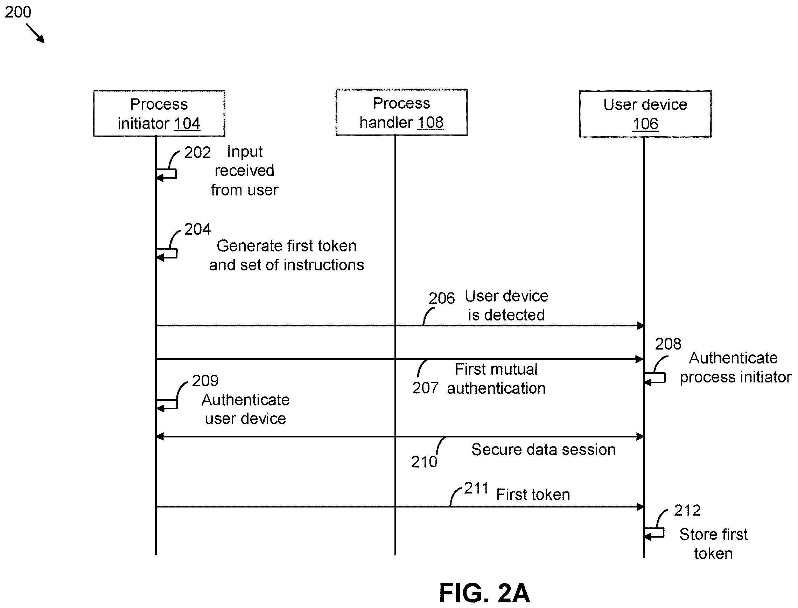

FIGS. 2A-2C represent a process flow diagram 200 that illustrates operations executed by the process initiator 104, the user device 106, and the process handler 108 of the system environment 100 in accordance with an embodiment of the present disclosure.

Referring to FIG. 2A, at arrow 202, the process initiator 104 may receive the input from the user 102 that may be indicative of executing the secure operation on the user data. Upon providing the input to the process initiator 104, the user 102, having the user device 106, may proceed to the location of the process handler 108. At arrow 204, the process initiator 104 may generate the set of instructions IS1-ISN and the first token FT based on the input. At arrow 206, the process initiator 104 may detect the user device 106 being within the first range of the process initiator 104 upon generating the first token FT. At arrow 207, the process initiator 104 may initiate the first mutual authentication between the user device 106 and the process initiator 104 based on the detection. During the first mutual authentication, the user device 106 may authenticate the process handler 108, as shown by arrow 208, and the process initiator 104 may authenticate the user device 106, as shown by arrow 209. At arrow 210, the process initiator 104 may establish the secure data session with the user device 106 upon the successful first mutual authentication. At arrow 211, the process initiator 104 may provide the first token FT to the user device 106 upon establishing the secure data session. At arrow 212, the user device 106 may store the first token FT based on the reception.

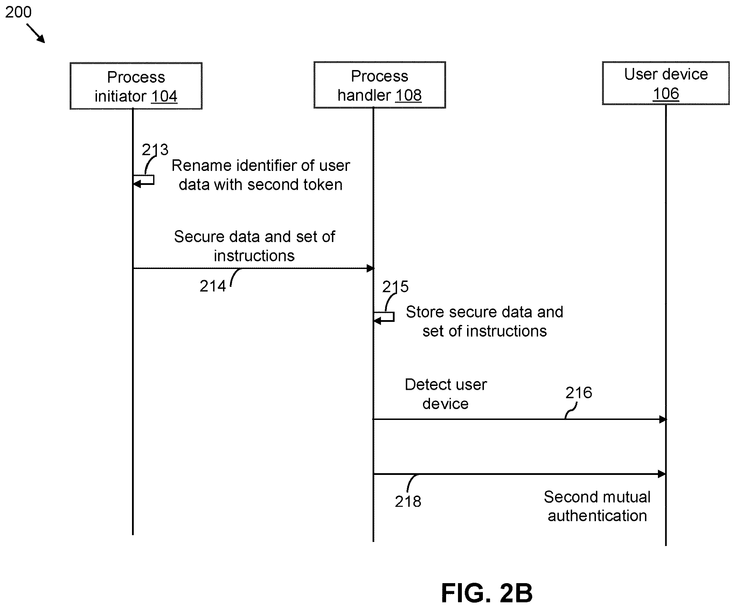

Referring to FIG. 2B, at arrow 213, the process initiator 104 may rename the identifier (such as the file ID) of the user data with the second token ST. Upon renaming the file ID of the user data with the second token ST, the user data is converted to the secure data SD. The secure operation, such as the printing operation, may thus be executed on the secure data SD. At arrow 214, the process initiator 104 may provide the secure data SD and the set of instructions IS1-ISN to the process handler 108 by way of the communication network 110. In various embodiments, the process initiator 104 may provide the secure data SD and the set of instructions IS1-ISN to the process handler 108 prior to providing the first token FT to the user device 106. In further embodiments, the process initiator 104 may simultaneously provide the first token FT to the user device 106, and the secure data SD and the set of instructions IS1-ISN to the process handler 108. At arrow 215, the process handler 108 may wirelessly receive and store the secure data SD and the set of instructions IS1-ISN based on the reception. At arrow 216, the process handler 108 may detect the user device 106 to be within the detection range of the process handler 108. At arrow 218, the process handler 108 may initiate the second mutual authentication between the user device 106 and the process handler 108.

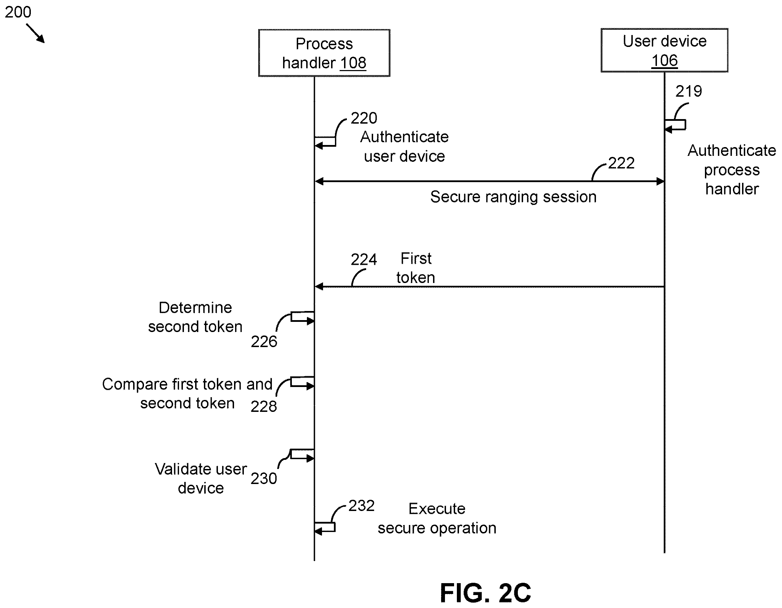

Referring to FIG. 2C, during the second mutual authentication, the user device 106 may authenticate the process handler 108, as shown by arrow 219, and the process handler 108 may authenticate the user device 106, as shown by arrow 220. At arrow 222, the process handler 108 may establish the secure ranging session with the user device 106 based on the second mutual authentication being successful. At arrow 224, the user device 106 may provide the first token FT to the process handler 108 in the established secure ranging session. At arrow 226, the process handler 108 may determine the second token ST associated with the process initiator 104. The second token ST may be further associated with the secure operation. At arrow 228, the process handler 108 may compare the first token FT and the second token ST to determine a match between the first token FT and the second token ST. As the first token FT and the second token ST may be identical, the first token FT may match the second token ST. At arrow 230, the process handler 108 may validate the user device 106 based on a successful match between the first token FT and the second token ST. At arrow 232, the process handler 108 may execute the secure operation on the secure data SD based on the set of instructions IS1-ISN and the validation of the user device 106.

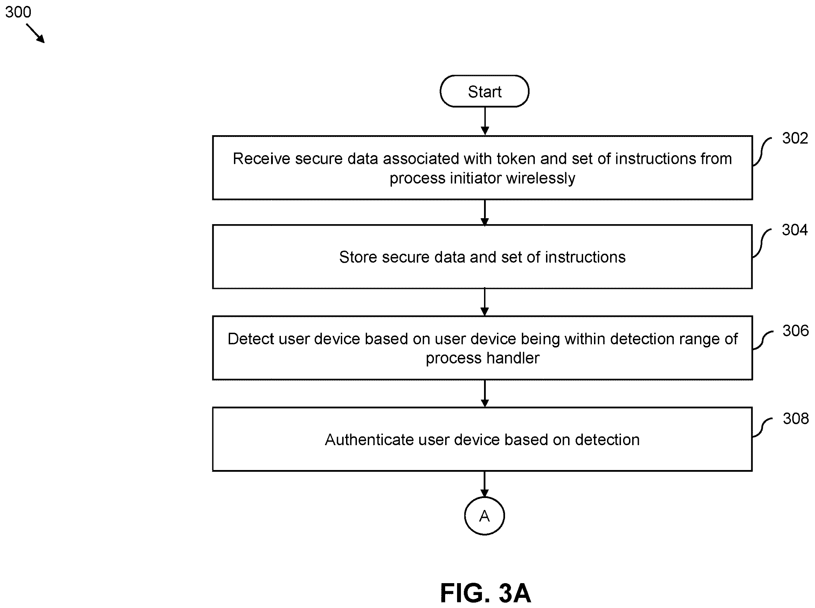

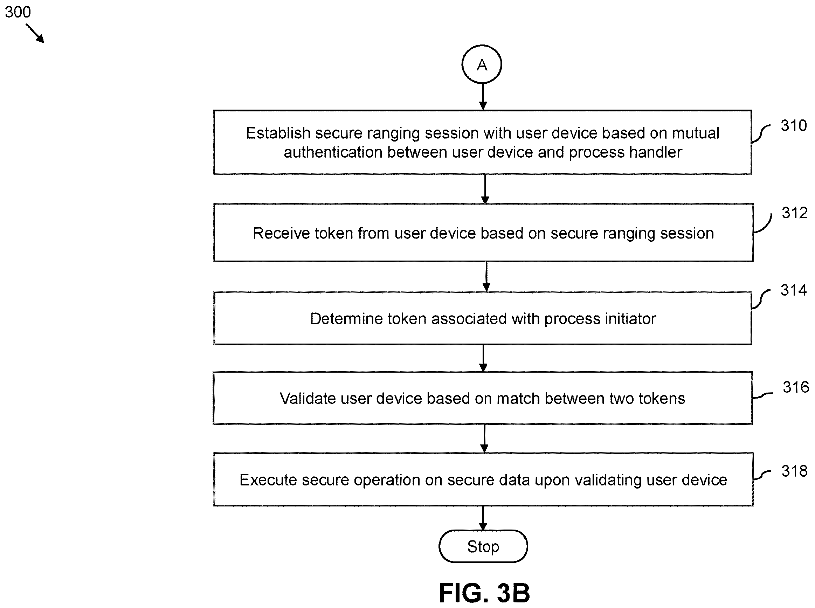

FIGS. 3A and 3B, collectively represent a flowchart 300 that illustrates a secure method executed by the process handler 108 of the system environment 100 in accordance with an embodiment of the present disclosure. Upon receiving the input to execute the print operation on the user data by the process initiator 104 from the user 102, the user data may be converted to the secure data SD by renaming the identifier (such as the file ID) of the user data with the second token ST. Further, the first token FT may be provided to the user device 106 by the process initiator 104 based on the input received from the user device 106.

Referring to FIG. 3A, at step 302, the process handler 108 may receive the secure data SD associated with a token (e.g., the second token ST) and the set of instructions IS1-ISN from the process initiator 104 by way of the communication network 110. In other embodiments, the process handler 108 may receive the secure data SD associated with the second token ST and the set of instructions IS1-ISN from the process initiator 104 through a wired connection, a wireless communication channel, or a combination thereof. The second token ST may be the identifier (such as the file ID) of the secure data SD. At step 304, the process handler 108 may store the secure data SD (e.g., the second token ST) and the set of instructions IS1-ISN. At step 306, the process handler 108 may detect the user device 106 based on the user device 106 being within the detection range of the process handler 108. At step 308, the process handler 108 may authenticate (the second mutual authentication 218 shown in FIG. 2B) the user device 106 based on the detection of the user device 106 within the detection range The process handler 108 and the user device 106 may authenticate each other during the second mutual authentication.

Referring now to FIG. 3B, at step 310, the process handler 108 may establish the secure ranging session with the user device 106 based on the second mutual authentication between user device 106 and process handler 108 being successful. At step 312, the process handler 108 may receive a token (e.g., the first token FT) from the user device 106 based on the established secure ranging session. At step 314, the process handler 108 may determine the second token ST associated with the process initiator 104. The second token ST may be further associated with the secure operation. At step 316, the process handler 108 may validate the user device 106 based on the match between the two tokens (e.g., the first token FT and the second token ST). The process handler 108 may compare the first token FT and the second token ST to determine the match between the first token FT and the second token ST. As the first token FT and the second token ST may be identical, the first token FT may match the second token ST. At step 318, the process handler 108 may execute the secure operation on the secure data SD based on the validation of the user device 106. The secure operation on the secure data SD may be executed based on the set of instructions IS1-ISN.

As the process handler 108 may execute the secure operation based on the match between the first token FT and the second token ST, a robust, secure solution to print the secure data SD may be provided by the system environment 100. Further, the secure operation may be accurately executed on the secure data SD based on the user data being encoded with the second token ST. Thus, the secure operation on any erroneous data may be avoided. The effects of network attacks, such as man-in-the-middle or relay attacks, that may occur during the transmission of the first token FT and the second token ST may be significantly reduced due to transmission of the second token ST in the secure ranging session. The security offered by the system environment 100 may be further improved as the execution of the secure operation may have to be within the validity period. The system environment 100 may eliminate a need for the user 102 to remember or maintain unique identifiers associated with the user 102 (e.g., username and password, cards) for the execution of the secure operation thereby providing a seamless, hands-free operation. Further, the need to generate prompts by the process handler 108 to confirm an intent of the user 102 to execute the secure operation may be eliminated as the execution of the secure operation may be based on the user device 106 being within the detection range. An experience of the user 102 may be thus improved over conventional techniques that may require a user to remember or maintain unique identifiers.

While various embodiments of the present disclosure have been illustrated and described, it will be clear that the present disclosure is not limited to these embodiments only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements. The term "coupled" may refer to at least one of direct or indirect coupling that may not necessarily be by way of mechanical or any physical means. Further, a system or method that "comprises", "has", or "includes" one or more elements possesses those one or more elements but is not limited to possessing only those one or more elements.

In an embodiment of the present disclosure, a process handler may be disclosed. The process handler may comprise circuitry that may be configured to establish a secure ranging session with a user device based on the user device being within a detection range associated with the circuitry. The circuitry may be further configured to receive a first token from the user device based on the established secure ranging session, wherein the first token may be generated by a process initiator to facilitate a secure operation. The circuitry may be further configured to determine a second token associated with the process initiator, wherein the second token may be further associated with the secure operation. The circuitry may be further configured to validate the user device based on a match between the first token and the second token and execute based on the validation of the user device, the secure operation.

In some embodiments, the first token and the second token may include random data.

In some embodiments, the first token and the second token may have a token length of at least 16 bytes.

In some embodiments, the first token and the second token may be set to expire after a validity period.

In some embodiments, the circuitry may validate the user device in the validity period.

In some embodiments, the circuitry may be further configured to receive secure data and a set of instructions corresponding to the secure operation from the process initiator, and wherein the second token may be an identifier of the secure data.

In some embodiments, based on the validation of the user device, the circuitry may execute the secure operation based on the secure data and the set of instructions.

In some embodiments, the secure ranging session may be an ultrawideband secure ranging session.

In some embodiments, the validation of the user device may be indicative of comparing the first token and the second token to determine the match between the first token and the second token.

In some embodiments, the circuitry may receive the second token prior to receiving the first token.

In some embodiments, the circuitry may be further configured to detect, prior to establishing the secure ranging session, the user device, wherein the user device may be detected based on the user device being within the detection range associated with the circuitry.

In some embodiments, the circuitry may be further configured to authenticate the user device, wherein the secure ranging session may be established based on a mutual authentication between the process handler and the user device being successful.

In some embodiments, the secure operation may correspond to printing of data, wherein the process handler may comprise one of a standalone printer or a network printer.

In some embodiments, the circuitry may comprise an ultrawideband (UWB) anchor that may be configured to detect the user device within the detection range and establish the secure ranging session with the user device based on the user device being in the detection range. The UWB anchor may be further configured to receive the first token from the user device based on the established secure ranging session.

In some embodiments, the circuitry may further comprise a secure element coupled to the UWB anchor, wherein the secure element may be configured to receive the second token from the process initiator. The secure element may be further configured to validate the user device based on the match between the first token and the second token.

In further embodiments of the present disclosure, a method may be disclosed. The method may comprise, establishing, by a process handler, a secure ranging session with a user device based on the user device being within a detection range of a process handler. The method may further comprise receiving, by the process handler, a first token from the user device based on the established secure ranging session, wherein the first token may be generated by a process initiator to facilitate a secure operation. The method may further comprise determining, by the process handler, a second token associated with the process initiator, wherein the second token may be further associated with the secure operation. The method may further comprise validating, by the process handler, the user device based on a match between the first token and the second token and executing, by the process handler, the secure operation based on the validation of the user device.

In some embodiments, the secure ranging session may be a ultrawideband ranging session. In some embodiments, the first token and the second token may be set to expire after a validity period.

In some embodiments, the method further comprises receiving, by the process handler, secure data and a set of instructions corresponding to the secure operation from the process initiator.

In some embodiments, the second token may be an identifier of the secure data.

## Claims

1. A process handler comprising:
circuitry configured to:
establish a secure ranging session with a user device based on the user device being within a detection range associated with the circuitry;
receive a first token from the user device based on the established secure ranging session, wherein the first token is generated by a process initiator to facilitate a secure operation;
determine a second token associated with the process initiator, wherein the second token is further associated with the secure operation;
validate the user device based on a match between the first token and the second token; and
execute, based on the validation of the user device, the secure operation.

2. The process handler of claim 1, wherein the first token and the second token include random data.

3. The process handler of any of the preceding claims, wherein the first token and the second token have a token length of at least 16 bytes.

4. The process handler of any of the preceding claims, wherein:
the first token and the second token are set to expire after a validity period; and
the circuitry is configured to validate the user device in the validity period.

5. The process handler of any of the preceding claims, wherein the circuitry is further configured to:
receive secure data and a set of instructions corresponding to the secure operation from the process initiator, wherein the second token is an identifier of the secure data; and
based on the validation of the user device, the circuitry executes the secure operation based on the secure data and the set of instructions.

6. The process handler of any of the preceding claims, wherein the secure ranging session is an ultrawideband secure ranging session.

7. The process handler of any of the preceding claims, wherein the validation of the user device is indicative of comparing the first token and the second token to determine the match between the first token and the second token.

8. The process handler of any of the preceding claims, wherein the circuitry receives the second token prior to receiving the first token.

9. The process handler of any of the preceding claims, wherein the circuitry is further configured to detect, prior to establishing the secure ranging session, the user device, wherein the user device is detected based on the user device being within the detection range associated with the circuitry.

10. The process handler of any of the preceding claims, wherein the circuitry is further configured to authenticate the user device, and wherein the secure ranging session is established based on a mutual authentication between the process handler and the user device being successful.

11. The process handler of any of the preceding claims, wherein the secure operation corresponds to printing of data, and wherein the process handler comprises one of a standalone printer or a network printer.

12. The process handler of any of the preceding claims, wherein the circuitry comprises:
an ultrawideband (UWB) anchor that is configured to:
detect the user device within the detection range; establish the secure ranging session with the user device based on the user device being in the detection range; and
receive the first token from the user device based on the established secure ranging session.

13. The process handler of claim 12, wherein the circuitry further comprises:
a secure element coupled to the UWB anchor, wherein the secure element is configured to:
receive the second token from the process initiator; and
validate the user device based on the match between the first token and the second token.

14. A method comprising:
establishing, by a process handler, a secure ranging session with a user device based on the user device being within a detection range of the process handler;
receiving, by the process handler, a first token from the user device based on the established secure ranging session, wherein the first token is generated by a process initiator to facilitate a secure operation;
determining, by the process handler, a second token associated with the process initiator, wherein the second token is further associated with the secure operation;
validating, by the process handler, the user device based on a match between the first token and the second token; and
executing, by the process handler, the secure operation based on the validation of the user device.

15. The method of claim 14, wherein:
the first token and the second token are set to expire after a validity period.
